# EUROPEAN PATENT APPLICATION

(11) **EP 2 808 794 A1**
(43) Date of publication of application: **03.12.2014**
(21) Application number: 13169871.4
(22) Date of filing: 30.05.2013
(51) Int. Cl.: G06F 9/54, G06F 9/45, G06F 17/30

(54) **Rearranging a server response**

(71) Applicant: Siemens Aktiengesellschaft, 80333 München (DE)
(72) Inventor: Pellegri, Giordano, 19100 La Spezia (IT)
(74) Representative: Maier, Daniel Oliver

(57) **Abstract**

A method and a system is provided for rearranging a server response (RESP) responding to a request (REQ) of a client browser, wherein the client request (REQ) is requesting to get a given web-page and wherein the related server response (RESP) comprises a page markup code (PMC) with client instructions in form of internal code portions and in form of external code portions, the external code portions being located in files whose links are within the page markup code (PMC);
the invention comprising:
a) processing the page markup code (PMC) so as to obtain a rearranged page markup code (R_PMC) so that at least some of the code portions are grouped in an uniform manner according to optimizing criteria;
b) providing a rearranged server response (R_RESP) to be sent to the client (CL) in response to the client request (REQ), said rearranged server response (R_RESP) comprising the rearranged page markup code (R_PMC) obtained with the processing of the previous item.

## Description

The invention relates to a method and a system for rearranging a server response responding to a request of a client browser according to the preamble of claims 1 and 12. Today's software applications are increasingly written in form of web applications, i.e. they are coded in a browser supported programming language and they are reliant on a common web browser to render the application executable. Web applications are popular due to the ubiquity of web browsers, and the convenience of using a web browser as a client. Unfortunately, today's web applications and websites often suffer of performance problems mainly due to the poor optimization of bandwidth usage, of data exchange time between client and server, of web page load time, of web page rendering time duration, etc.

Another typical technical problem of today's web applications and websites is the fact that the client browser limitations are usually not checked by developing tools and by developers. Well known browser limitations include: maximum number of css includes per page, max length of a script resource, etc.

Many software developers design complex web applications using server side technologies such as Microsoft .NET which is an excellent framework for enabling software developers to write complex web application using visual tools, prebuilded controls, themes, etc.

However, such high level vision of the projects components does not allow software developers to know how all the server side logic is rendered at the client side. This is the reason why complex web applications and websites often suffer of poor levels of performances.

Moreover, sometimes there might be also other performance problems which in the worse case scenarios can become blocking problems and which can prove to be difficult to be detected such as, for example: the max number of css managed by the browser, the size of the view-state client control, the web page java-script and css code written directly in page, the position of these scripts in the code; in fact a java-script code in a bad position of the page, for example, may lead to a decrease of the client performance due to a limitation of the browser network threads.

Hence, today, tons of service enquiries are opened all over the world by customers to report several problems of usability of web applications and websites also due to some of the above mentioned poor performance levels. For most of these customers, the performance degree of software systems is a key issue for choosing a software vendor and for thrusting the software vendor capability of dealing with the challenges of the future.

In web applications and websites, a web page is rendered as a visual entity by a browser on a client screen following a handshaking process between the client and the server comprising a sequence of requests from the client to the server and a sequence of responses from the server to the client.

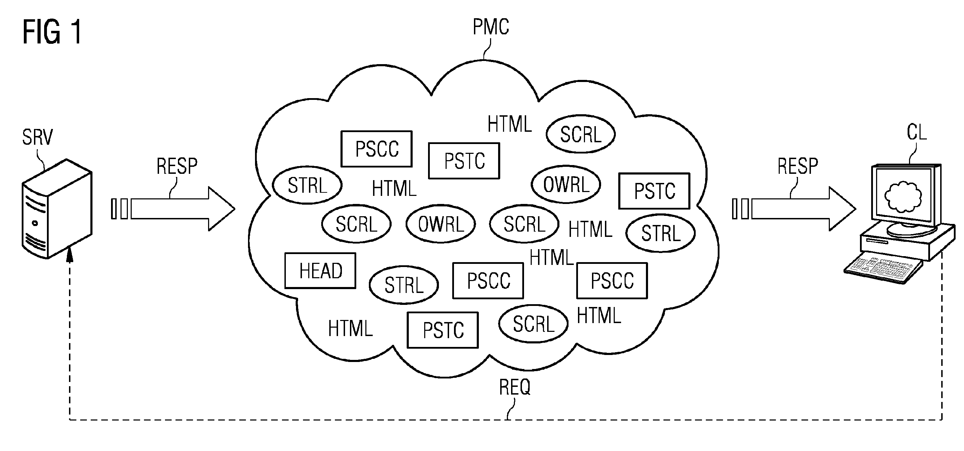

Figure 1 is a block diagram schematically illustrating an example of a web page requested by a client browser and a server response according to the prior art.

Let us assume a browser at the client CL formulates a request REQ to a server SRV to get a web page with a given URL.

The server responds to the client with a response RESP, the response RESP being a data stream containing a page markup code PMC written in HTML language comprising a sequence of instructions to be executed by the client.

As the skilled in the art knows, the web page markup code PMC may often comprise also one or more of the following:
- a set of css code portions present in the page markup code PMC;
- a set of scripts present in the page markup code PMC;
- a set of links to external CSS files;
- a set of links to external script files.

It is also noted that, as the skilled in the art knows, the links to external files (i.e. css files or script files) can either refer to static or dynamic files. Dynamic files are built at runtime and some of their content changes according to the client request; static files instead are stored in the filesystem and their content usually does not change. Dynamic resources usually vary for each new client request depending on the related server processing and, usually, a client is "a priori" not aware whether an external link is referring to a dynamic file type or to a static file type instead. The server instead is usually knowledgeable if an external file is of a dynamic or static type. The knowledge if a file is of dynamic or static type is usually provided to the server through a variety of well known expedients such as, for example, the file name or the file url syntax or by verifying whether the file is existing within the filesytem given its url.

Hence, as shown in Figure 1, a server response RESP to the client CL is in form of the page markup code PMC written in html language HTML containing a head HEAD and a body (not shown) and it may comprise also one or more of the following:
- a style resource link STRL: a link to a css file;
- a script resource link SCRL: a link to script file;
- a page script code PSCC: a script portion present in the page markup code PMC;
- a page style code PSTC: a css portion present in the page markup code PMC;
- other web resource link OWRL: a link to any other generic web resources (different than css and script files) as for example images, video, music files, excel files, word files etc.

It is noted that a page style code or a page script code are code portions present in the markup code PMC, which could be present before runtime or inserted at runtime by the server side process.

According to the web-page handshaking process, there are three main steps required in a client/server communication exchange:
Step 1) the client CL sends a request REQ to the server SRV, e.g. the opening of a web page with a given URL
Step 2) the server SRV generates a response RESP containing client instructions in form of page markup code PMC for executing the request REQ of step 1)
Step 3) the client CL analyzes the response RESP received in step 2) and executes the contained instructions with a sequence of requests to the server SRV requesting all the necessary resources to be downloaded from the server, processing them so as to visualize the requested web page content to be rendered. Such necessary resources to be downloaded may include: images, sounds, css styles, scripts and other.

As the skilled in the art knows, step 3) is where performance problems are often experienced by the final user, such as slow page rendering, long waiting and page freezes.

The performance problems intended to be solved by the present invention are usually due to network and browser limitations and to the fact that the page markup code PMC of the server response RESP is typically not written in an optimized manner for reducing the network usage and its limitation side effects.

Well known methods for dealing with the above mentioned performance problems consist in performing investigations at the server and client sides, for example by investigating the hardware, the resources consumption, the logs, the data storage and the data processing times and so on. Unfortunately, such methods suffer of the drawback that the server response is not optimized taking into account the client requirements. This might imply that the client side generated code be very heavy to be processed by the browser due to downloading time of a lot of web resources (scripts, css styles, images, sounds, word and excel documents etc), due to rendering time of resources etc.

Other methods for dealing with the above mentioned performance problems consist in the reengineering of the web-application on both sides, i.e. client and server. Unfortunately, such methods suffer of the following drawbacks: all source codes that are needed are sometimes not available due to third party components not being not open source; high software skills are required; great time effort is required; maintenance efforts and high costs are involved.

Other methods for dealing with the above mentioned performance problems consist in improving the hardware. Unfortunately, such methods suffer of the following drawbacks: moderate to high cost; the application must be scalable; it could not be sufficient to obtain good performances.

Other methods for dealing with the above mentioned performance problems make use of proxy-caching systems. Unfortunately, such methods suffer of the drawback of risking the data consistencies due to the memorization system that cache the traffic. Moreover, a proxy system is typically an external system, stand-alone in the middle between the web servers and the clients and, hence, it needs to be a really fast system in order to avoid introducing delays between requests and responses, thus requiring high hardware cost and a remarkably fast network.

It is therefore aim of the present invention to overcome the above mentioned drawbacks, by providing a method and a system for rearranging a server response RESP responding to a request of a client browser so that its execution by the client is optimized to minimize the above mentioned performance problems.

The aforementioned aim is achieved by a method and a system for rearranging a server response responding to a request of a client browser, wherein the client request is requesting to get a given web-page and wherein the related server response comprises a page markup code with client instructions in form of internal code portions and in form of external code portions, the external code portions being located in files whose links are within the page markup code;
the invention comprising:
a) processing the page markup code so as to obtain a rearranged page markup code so that at least some of the code portions are grouped in an uniform manner according to optimizing criteria;
b) providing a rearranged server response to be sent to the client CL in response to the client request, said rearranged server response comprising the rearranged page markup code obtained with the processing of the previous step.

In invention embodiments, external code portions may comprise external script portions included in script files and wherein item a) may comprise the following sub-items:
a21) merging all the contents of the script files into one script meta-file;
a22) linking the script meta-file in the rearranged page markup code, preferably at its bottom;
a23) removing all the links to the external script files from the rearranged page markup code.

In invention embodiments, external code portions may comprise external css portions included in css files and wherein item a) may comprise the following sub-items:
a31) merging all the contents of the css files into one css meta-file;
a32) linking the css meta-file in the head of the rearranged page markup code;
a33) removing all the links to the external css files from the rearranged page markup code.

In invention embodiments, internal code portions may comprise internal script portions; wherein sub-item a21) may further comprise merging all the internal script portions into the script meta-file and wherein sub-item a23) may further comprise removing all the internal script portions from the rearranged page markup code.

In invention embodiments, internal code portions may comprise internal script portions and wherein item a) may comprise the following sub-items:
a51) merging all the internal script portions into one script meta-file;
a52) linking the script meta-file in the rearranged page markup code, preferably at its bottom;
a53) removing all the internal script portions from the rearranged page markup code.

In invention embodiments, internal code portions may comprise internal css portions; wherein sub-item a31) may further comprise merging all the internal css portions into the css meta-file and wherein sub-item a33) may further comprise removing all the internal css portions from the rearranged page markup code.

In invention embodiments, internal code portions may comprise internal css portions and wherein item a) may comprise the following sub-items:
a71) merging all the internal css portions into one css meta-file;
a72) linking the css meta-file in the head of the rearranged page markup code;
a73) removing all the internal css portions from the rearranged page markup code.

In invention embodiments, dynamic files may be preferably treated separately than static files by creating dynamic and static meta-files, and by merging the contents of dynamic files into the corresponding dynamic meta-file and by preferably adding to the static meta-files, i.e. the meta-files that have non-dynamic contents, a caching header in order to force the client to cache it for a given time-out which may conveniently parameterized.

In invention embodiments, at least one of the meta-files may be given a global visibility.

In invention embodiments, at least one among the meta-files and the rearranged page markup code may advantageously be minified and/or compressed.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

With embodiments of the present invention, by controlling the response generated at server side, a control at the client side is conveniently achieved. In fact, through invention embodiments, the processing at the server side results in optimizations of the logics of the functioning of the client code.

With embodiments of the present invention, the performances of web applications are optimized.

Embodiments of the present invention lead to improvements of the performance of client executions by reducing the required bandwidth usage, by reducing the amount of data exchange between client and server and by requiring less time of elaboration at the client side.

Embodiments of the present invention enable to speed up the entire web page lifecycle by optimizing the source code generated by the server side processing. The performance optimization has a positive impact not only on the performances of the network connections at the client side but also on the processing speed at the server side. In fact, embodiments of the invention allow improving the management of the requests arriving from the client to the server and, as a second step, the ones from the server to the client.

Embodiments of the invention allow transversal optimizations.

Invention embodiments achieve performance gains without requiring re-engineering of the code by the system integrator or by the software developer. Since no code re-engineering is required, evident technical advantages are obtained in terms of cost reductions, also due to less required efforts during maintenance. Moreover, the Intellectual Property of the source code is preserved.

Embodiments of the invention allow a transparent integration since the rearranging of the server response is performed at the end of the server processing and before the upload to the client.

Embodiments of the invention allow fast integration with pre-existing applications. For example, in the field of Manufacturing Execution Systems, embodiments of the present invention can be integrated in an easy manner with other Simatic-IT web sites and web applications based on html developed by Siemens Company.

Embodiments of the invention allow avoiding potential performance problems which might be a-priori unknown or which might not be considered by developers at planning time or which might not be manageable directly by the developer source code.

The rearranging of the server response through embodiments of the present invention enables to obtain the following results:
- a rearranged page markup code with a cleaned source code;
- a minimized number of css and script resources;
- content reduction through minification and/or compression.

Embodiments of the invention enable to obtain only one static css file called static css meta-file grouping together all static css file contents with the following advantages:
- having only one static css file reduces the number of connections that the client browser has to open to download the static css resources; the download is performed just once before the client cache expires;
- a cache header may be advantageously be inserted so as to force the client to cache such static css meta file in order to save bandwidth and to reduce the amount of exchanged data between client and server;
- such static css-metafile may conveniently be linked in the head of the rearranged page markup code so as to reduce the client elaboration time.

Embodiments of the invention enable to obtain only one dynamic css file called dynamic css meta-file grouping together all dynamic css file contents with the following advantages:
- having only one dynamic css file reduces the number of connections that the client browser has to open to download the dynamic css resources;
- such dynamic css-metafile may conveniently be linked in the head of the rearranged page markup code so as to reduce the client elaboration time.

Embodiments of the invention enable to obtain only one static script file called static script meta-file grouping together all static script file contents with the following advantages:
- having only one static script file reduces the number of connections that the client browser has to open to download the static script resources; the download is performed just once before the client cache expires;
- a cache header may be advantageously be inserted so as to force the client to cache such static script meta file in order to save bandwidth and to reduce the amount of exchanged data between client and server;
- such static script metafile may conveniently be linked in the the rearranged page markup code, preferably at its bottom so as to reduce the client elaboration time.

Embodiments of the invention enable to obtain only one dynamic script file called dynamic script meta-file grouping together all dynamic script file contents with the following advantages:
- having only one dynamic script file reduces the number of connections that the client browser has to open to download the dynamic script resources;
- such dynamic script metafile may be linked in the rearranged page markup code, preferably at its bottom so as to reduce the client elaboration time.

It is noted that the linking of the static/dynamic script metafile at the bottom of the rearranged page markup code is optional since there might some situations or browser types where positioning the script links at the bottom is not to be recommended.

Embodiments of the invention enable to remove the css/script contents from the rearranged page markup code and placing them into the static css/script meta-file with the following advantages:
- saving bandwidth and to reduce the amount of exchanged data between client and server;
- reducing the client elaboration time.

The invention will now be described in preferred but not exclusive embodiments with reference to the accompanying drawings, wherein:
- Figure 1: is a block diagram schematically illustrating an example of a web page requested by a client browser and a server response according to the prior art (previously described);
- Figure 2: is a block diagram schematically illustrating an example of a web page requested by a client browser and a server response according to an example embodiment of the present invention.

At least some embodiments of the present invention addresses the above described issue in which a server response RESP generated in response to a request REQ of a client browser is rearranged into a rearranged server response R_RESP. The client request REQ is requesting to get a given web-page and the related generated server response RESP comprises a page markup code PMC with client instructions in form of internal code portions and in form of external code portions, the external code portions are located in files whose links are situated within the page markup code PMC.

The rearranging of the server response RESP according to the present invention comprises the following:
- processing the page markup code PMC so as to obtain a rearranged page markup code R_PMC so that at least some of the code portions are grouped in an uniform manner according to optimizing criteria; some of the different type of code portions may for example comprise internal or external code portions, scripts or css styles, dynamic or static files which may be grouped, in embodiments of the present invention, according to their type.
- providing a rearranged server response R_RESP to be sent to the client CL in response to the client request REQ, the rearranged server response R_RESP comprising the rearranged page markup code R_PMC.

The page markup code PMC includes the instruction to be performed at the client side for showing the given web-page. Such instructions may be in form of internal and external code portions.

External code portions are located in (external) files which are linked inside the page markup code PMC. Such files may be script files or css files. In addition, such script and css files may be static or dynamic.

Instead, internal code portions are present inside the page mark-up code PMC.

As a result, the page mark-up code PMC comprises one or more of the following:
- a set of links to a static css file STRL;
- a set of links to a dynamic css file STRL;
- a set of links to a static script file SCRL;
- a set of links to a dynamic script file SCRL;
- a set of css code portions PSTC
- a set of script code portions PSCC.

### Rearranging of script contents

In at least some invention embodiments, where the page mark-up code PMC comprises a set of links to script files SCRL (which is non void), the rearranging of the server response RESP into the rearranged server response R_RESP may comprise also the following:
- merging all the contents of the script files into one script meta-file;
- linking the script meta-file in the rearranged page markup code R_PMC, preferably at its bottom;
- removing all the links to the script files from the rearranged page markup code R_PMC.

In addition, static and dynamic script files may be treated differently so that all contents of the static script files are merged into a static script meta-file and all contents of the dynamic script files are merged into a dynamic script meta-file. With such separation, a cache header may conveniently be added to the static script meta-file to force the client to cache it for a predefined time.

In addition, in case the set of scripts PSCC present inside the page markup code is non-void, the rearranging of the server response RESP into the rearranged server response R_RESP may further comprise the following:
- merging all the contents of the script set into the (static if a differentiation is present) script meta-file;
- removing all the scripts from the rearranged page markup code R_PMC.

### Rearranging of css contents

In at least some invention embodiments, where the page mark-up code PMC comprises a set of links to css files STRL(which is non void), the rearranging of the server response RESP into the rearranged server response R_RESP may comprise also the following:
- merging all the contents of the css files into one css meta-file;
- linking the css meta-file in the head of the rearranged page markup code R_PMC;
- removing all the links to the css files from the rearranged page markup code R_PMC.

In addition, static and dynamic css files may be treated differently so that all contents of the static css files are merged into a static css meta-file and all contents of the dynamic css files are merged into a dynamic css meta-file. With such separation, a cache header may conveniently be added to the static css meta-file to force the client to cache it for a predefined time.

In addition, in case the set of css code portions PSTC present inside the page markup code is non-void, the rearranging of the server response RESP into the rearranged server response R_RESP may further comprise the following:
- merging all the contents of the css code portion set into the (static if a differentiation is present) script meta-file;
- removing all the css code portions from the rearranged page markup code R_PMC.

In summary, in the rearranged server response R_RESP according to embodiments of the present invention one of more of the following optimizations may be executed:
I. the contents of all static script files may be merged into one static script meta-file having a cache header (to force the client to cache it for a predefined time). Such static script meta-file is linked in the rearranged page markup code R_PMC, preferably at its bottom. All the links to all static script files are removed from the rearranged page markup code R_PMC.
II. all script portions present in the page markup code PMC may be merged into the static script meta-file and all such script portions are removed from the rearranged page markup code R_PMC.
III. the contents of all dynamic script files are merged into one dynamic script meta-file, without caching header. Such dynamic script meta-file is linked in the page markup code R_PMC, preferably at its bottom. All the links to all dynamic script files are removed from the page markup code R_PMC.
IV. the contents of all static css files may be merged into one static css meta-file having a cache header (to force the client to cache it for a predefined time). Such static css meta-file is linked in the head of the rearranged page markup code R_PMC , from which all the links to all static css files are removed.
V. all css code portions present in the page markup code PMC may be merged into the static css meta-file and all such css code portions are removed from the rearranged page markup code R_PMC.
VI. the contents all dynamic css files are merged into one dynamic css meta-file, without caching header. Such dynamic css meta-file is linked in the head of the page markup code R_PMC, from which all the links to all dynamic css files are removed.

In at least some invention embodiments, at least one of the meta-files is given a global visibility so that it becomes a global meta-file. To have global meta-files is particularly advantageous since - in case another browser makes a request to the server which is the same to any of the previous browser requests made to the server - the global meta-files can be reused without need of being regenerated by the server, with evident performance improvements by saving CPU time. In other embodiments, a browser can make a request "similar" to previous ones in that only some of the requested resources are the same as the previous requests from other browser, in such a case only some of the global meta-files can be conveniently re-used.

In order to have fast access to the global meta-files such files can be cached in the server memory for a given time-out which can be parameterized.

In embodiments of the present invention, at least one script and/or css meta-file may advantageously be minified and/or compressed. Also the cleaned html code may be minified and/or compressed.

Compression and minification are known performance optimizations for the skilled in the art. The following excerpts taken from Wikipedia at the voice "minification" provide some brief explanations:
- *"Minification (also minimisation or minimization), in computer programming languages and especially JavaScript, is the process of removing all unnecessary characters from source code, without changing its functionality. These unnecessary characters usually include white space characters, new line characters, comments, and sometimes block delimiters, which are used to add readability to the code but are not required for it to execute".*
- *"Minified source code is also very useful for HTML code. As an example, successive whitespace characters in HTML are rendered as a single space, so replacing all whitespace sequences with single spaces can considerably reduce the size of a page".*
- *"Minification can be distinguished from the more general concept of data compression in that the minified source can be interpreted immediately without the need for an uncompression step: the same interpreter can work with both the original as well as with the minified source".*
- *"JavaScript and CSS resources may be minified, preserving their behavior while considerably reducing their file size."*

Examples of minifications on script meta-files may include:
- removing unnecessary white spaces, line breaks;
- removing comments;
- removing unnecessary semicolons;
- removing curly braces from code blocks consisting of only one statement;
- renaming local variables and functions with shorter names;
- combining multiple separate variable declarations into one statement;
- removing empty parentheses from "If" constructors which are parameter-less;
- converting arrays constructors into array literals.

Examples of minifications on css meta-files may include:
- removing comments;
- removing all extra indenting, spaces, and line breaks;
- removing last semi-colons before closing brackets;
- removing empty style blocks.

Though the above concepts are known in the art, the skilled person surely appreciates the great technical advantages of having the possibility of performing such optimizations on meta-files or on cleaned source code as obtained with the rearranging process of the present invention. Such advantageous are even more remarkable in case the meta-files are global files used by several client browsers.

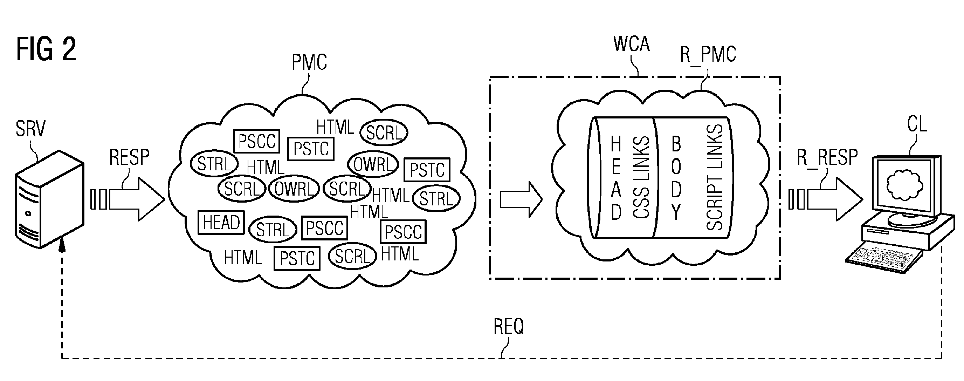

Figure 2 is a block diagram schematically illustrating an example of a web page requested by a client browser and a server response according to an example embodiment of the present invention.

At least some invention embodiments may be implemented through a module called Web Cycle Accelerator WCA located at the server side.

The proposed Web Cycle Accelerator WCA may also be seen as a module running on the server and artificially injected into a target web application as an optimization layer. By this way getting as input the server response RESP ready to be sent back to the client, optimize it and send it back to the client in form of a rearranged response R_RESP including a rearranged page markup code R_PMC. The re-arranged page markup code is optimized in a uniform and orderly manner so as to have:
- a head HEAD also comprising links to meta-css files, static and/or dynamic, CSS LINKS,
- an html body BODY;
- and a part including links to scripts, static and/or dynamically, SCRIPT LINKS, optionally located at the bottom of the rearranged page markup code R_PMC.

Such interaction is transparent to both client and server which do not notice that the rearranged response is a reengineered response.

Let us illustrate the technical advantages achieved through embodiments of the WCA with a simple numerical example.

Let us assume that a given web-application makes use of:
- 10 static script files (each of 10Kb)
- 5Kb of script code portions present in the page PMC
- 10 static css files (each of 10Kb)
- 3Kb of css code portions in the page PMC
- 5 dynamic script files (each of 10Kb)
- 5 dynamic css files (each of 10Kb)

| The above given web-application generates the following impact | |
|---|---|
| Without WCA | With embodiments of WCA (where all the optimizations of items I to VI are performed) |
| 1 client connection to download the page (with 8Kb of scripts and styles) | 1 client connection to download the page (without 8Kb of scripts and styles) |
| 15 client connections to download the script files | 2 client connections to download the script files (static and dynamic) |
| 15 client connections to download the css files | 2 client connections to download the css files (static and dynamic) |
| (308Kb + page content size) of bandwidth used by the client to download the resources | (308Kb + page content size) of bandwidth used by the client to download the resources the first cycle, from the second cycle the used bandwidth will be 100Kb + page content size. |

It is noted that the above illustrated example does not take into account further possible optimizations achievable through minification and compression. If minification and compression are active, the resource and page dimensions can be further reduced. Depending on the content, minification may also e.g. achieve a reduction of 50% whilst for compression e.g. the gzip algorithm might be used to potentially achieve a reduction of 71%. Thus, for the above illustrated simple numerical example, one could theoretically and optimally achieve a reduction of 50% from minification reducing the dimensions of the resources from 308Kb to 154Kb which could eventually be compressed with gzip of 71% obtaining 109Kb resources to be downloaded at the end of the process. Same process could also be applied to the page markup body.

It is noted that the performances improvements achieved with embodiments of the present invention depend on the way the original page markup was initially designed/developed.

It is noted that proxy caching systems, known in the prior art, achieve less performance improvements than embodiments of the present invention; for example if the web application has 15 css files, the proxy caching system would cache these files so that the client can download them faster but with invention embodiments, such files can also be merged into just one meta-file so that the performance improvement are even greater.

### List of used acronyms

- CSS: Cascade Style Sheet
- HTML: HyperText Markup Language
- URL: Uniform Resource Locator
- WCA: Web Cycle Accelerator

## Claims

1. A method for rearranging a server response (RESP) responding to a request (REQ) of a client browser, wherein the client request (REQ) is requesting to get a given web-page and wherein the related server response (RESP) comprises a page markup code (PMC) with client instructions in form of internal code portions and in form of external code portions, the external code portions being located in files whose links are within the page markup code (PMC);
the method comprising the steps of:
a) processing the page markup code (PMC) so as to obtain a rearranged page markup code (R_PMC) so that at least some of the code portions are grouped in an uniform manner according to optimizing criteria;
b) providing a rearranged server response (R_RESP) to be sent to the client (CL) in response to the client request (REQ), said rearranged server response (R_RESP) comprising the rearranged page markup code (R_PMC) obtained with the processing of the previous step.

2. The method according to claim 1, wherein external code portions comprise external script portions included in script files and wherein step a) comprises the following sub-steps:
a21) merging all the contents of the script files into one script meta-file;
a22) linking the script meta-file in the rearranged page markup code (R_PMC), preferably at its bottom;
a23) removing all the links to the external script files (STRL) from the rearranged page markup code (R PMC).

3. The method according to any of the previous claims,
wherein external code portions comprise external css portions included in css files and wherein step a) comprises the following sub-steps:
a31) merging all the contents of the css files into one css meta-file;
a32) linking the css meta-file in the head of the rearranged page markup code (R_PMC);
a33) removing all the links to the external css files (SCRL) from the rearranged page markup code (R_PMC).

4. The method according to claim 2, wherein internal code portions comprise internal script portions (PSCC); wherein sub-step a21) further comprises merging all the internal script portions (PSCC) into the script meta-file and wherein sub-step a23) further comprises removing all the internal script portions (PSCC) from the rearranged page markup code (R_PMC).

5. The method according to any of the claims 1 or 4, wherein internal code portions comprise internal script portions (PSCC) and wherein step a) comprises the following sub-steps:
a51) merging all the internal script portions (PSCC) into one script meta-file;
a52) linking the script meta-file in the rearranged page markup code (R_PMC), preferably at its bottom;
a53) removing all the internal script portions (PSCC) from the rearranged page markup code (R_PMC).

6. The method according to claim 3, wherein internal code portions comprise internal css portions (PSTC); wherein sub-step a31) further comprises merging all the internal css portions (PSTC)into the css meta-file and wherein sub-step a33) further comprises removing all the internal css portions (PSTC) from the rearranged page markup code (R_PMC).

7. The method according to any of the claims 1, 2, 4 or 5, wherein internal code portions comprise internal css portions (PSTC) and wherein step a) comprises the following sub-steps:
a71) merging all the internal css portions (PSTC)into one css meta-file;
a72) linking the css meta-file in the head (HEAD) of the rearranged page markup code (R_PMC);
a73) removing all the internal css portions (PSTC) from the rearranged page markup code (R PMC).

8. The method according to any of the previous claims,
wherein dynamic files are treated separately than static files by creating dynamic and static meta-files, and by merging the contents of dynamic files into the corresponding dynamic meta-file and by preferably adding to the static meta-files, i.e. the meta-files that have non-dynamic contents, a caching header in order to force the client to cache it for a given time.

9. The method according to any of the previous claims,
wherein at least one of the meta-files is given a global visibility.

10. The method according to any of the previous claims,
wherein at least one among the meta-files and the rearranged page markup code is minified and/or compressed.

11. A computer program product for performing steps of the method according to any of the claims 1 to 10.

12. A system for rearranging a server response (RESP) responding to a request (REQ) of a client browser, wherein the client request (REQ) is requesting to get a given web-page and wherein the related server response (RESP) comprises a page markup code (PMC) with client instructions in form of internal code portions and in form of external code portions, the external code portions being located in files whose links are within the page markup code (PMC);
the system comprising:
a) means for processing the page markup code (PMC) so as to obtain a rearranged page markup code (R_PMC) so that at least some of the code portions are grouped in an uniform manner according to optimizing criteria;
b) means for providing a rearranged server response (R_RESP) to be sent to the client (CL) in response to the client request (REQ), said rearranged server response (R_RESP) comprising the rearranged page markup code (R_PMC) obtained with the the previous item.
